# EUROPEAN PATENT SPECIFICATION

(11) **EP 2 075 077 B1**
(45) Date of publication and mention of the grant of the patent: **18.04.2012**
(21) Application number: 08172094.8
(22) Date of filing: 18.12.2008
(51) Int. Cl.: B21C 37/28, B21D 19/04, B23K 37/053, B23K 9/028, F16L 13/02, F16L 43/00

(54) **Apparatus for making elbow connections in tubular elements.**
Vorrichtung zur Herstellung von Winkelanschlüssen in röhrenförmigen Elementen
Appareil de fabrication de connexions en forme de coude dans des éléments tubulaires

(30) Priority: 24.12.2007 IT MO20070403
(43) Date of publication of application: 01.07.2009
(73) Proprietor: Digisystem S.r.l., 41019 Soliera (MO) (IT)
(72) Inventor: Tardini, Gianni, 41019, Soliera (MO) (IT)
(74) Representative: Crugnola, Pietro

(56) References cited:
- DE-A1- 19 700 289
- DE-C- 890 013
- DE-U1- 29 716 233
- FR-A- 2 386 377
- GB-A- 2 270 021
- US-A- 3 330 021
- US-A- 4 006 520

## Description

The present invention refers to an apparatus for making elbow connections in tubular elements, for example tubular elements for flues.

In the prior art making elbow connections in tubular elements by edging the ends of the tubular elements to be connected and welding together said ends by superimposing said edging is known, the welding being achieved by spot welding. A drawback of this type of connection is that the welding, being spot welding, is not continuous, thus leaving empty spaces in some points of the superimposed ends of the tubular elements, points that may constitute triggering zones for corrosion phenomena and that cause non-uniform distribution of the tensions in the welding zone. Another connecting technique makes, at each end of the tubular elements to be connected, a seam that is substantially perpendicular to the wall of the respective tubular element and to perform the connection by means of welding along said seam. This technique has the drawback that inside the tubular elements, in the connecting zone, a groove is created in which condensate can stagnate, with consequent triggering of corrosion phenomena.

The present invention proposes to provide an apparatus for making elbow connections between tubular elements that are reliable and stable over time, according to claim 1.

Owing to the invention it is possible to make the connection between tubular elements at edges made so that, in the connecting zone, the side surfaces of the tubular elements are aligned on one another.

Advantageously, a method for making elbow connections between at least a first tubular element and at least a second tubular element, wherein a longitudinal axis of said at least a first tubular element and a longitudinal axis of said at least a second tubular element together form a preset angle, said at least a first tubular element and at least a second tubular element having at least an end that is not perpendicular to the respective longitudinal axis, comprises making in said at least an end of said first tubular element and in said at least an end of said second tubular element a respective edge that is tilted with respect to said at least an end so that a side surface of said edge forms with a side surface of the respective tubular element an angle equal to a fraction of said preset angle, connecting together said first tubular element and said at least a tubular element at said respective edges. In the connecting zone the side surfaces of the tubular elements are advantageously aligned together, which enables the welded connection to be made, in a uniform manner and without generating anomalous tensions in any zone of the welding and without creating points or channels in which the condensate can stagnate and trigger corrosion phenomena.

The invention will be disclosed below by way of non-limiting example with reference to the attached drawings, in which:
Figure 1 is a raised view of an edging apparatus according to the invention;
Figure 2 is a detail of an edging apparatus according to the invention;
Figure 3 is a raised view of a welding apparatus according to the invention;
Figure 4 is a detail of the welding apparatus according to the invention;
Figure 5 and Figure 6 illustrate examples of elbow connections of tubular elements made according to the invention.

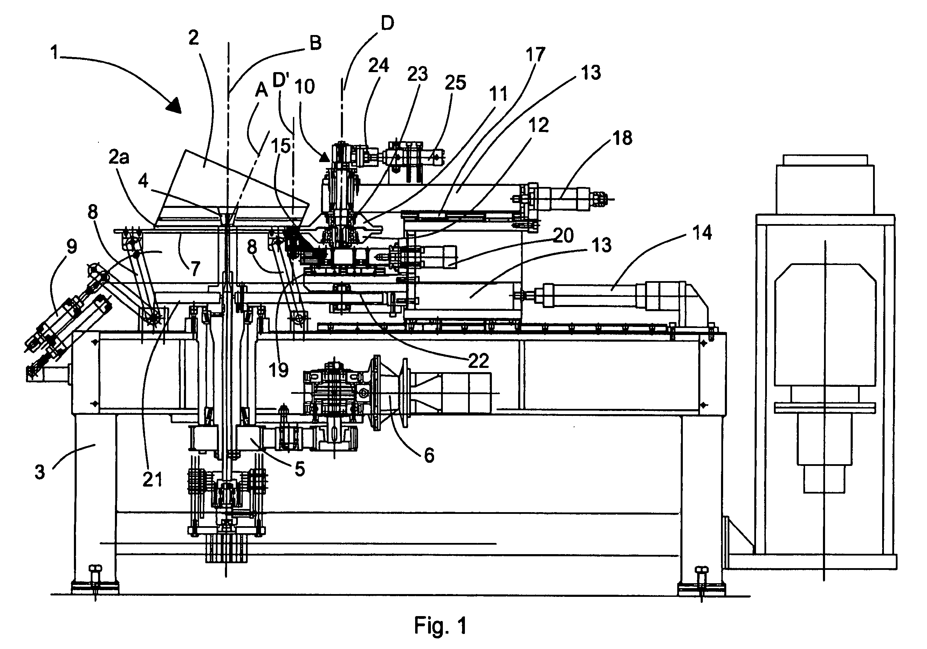

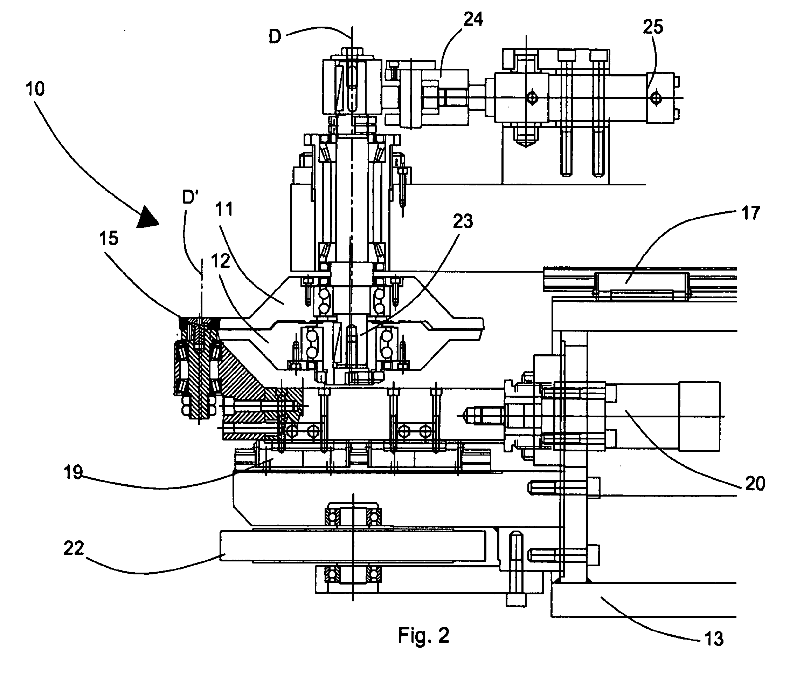

In Figures 1 and 2 there is illustrated a device 1 of an apparatus according to the invention, for edging and trimming tubular elements 2 to form elbow joints between said tubular elements 2.

The device 1 comprises a base 3 on which an expandable spindle 4 is supported that is intended for supporting and rotating the tubular element 2 on which the trimming and edging operations have to be conducted.

The spindle is driven, through motion-transmitting means 6, for example a belt transmission, by an alternating current motor 5 controlled by an inverter.

A flush-fitting resting plane 7 is connected to the base 3, by four connecting rods 8 (only two of which are visible in Figure 1), hinged at a respective first end thereof to the base 3 and at a respective second end thereof to the resting plane 7. All the connecting rods 8 are rotated by an operating cylinder 9 the stem of which is connected to one of the connecting rods. The rotation of the connecting rods 8 causes the resting plane 7 to be raised and/or lowered, to move from a non-operating position to an operating position (shown in Figure 1), or vice versa. The resting plane 7 is used to support the tubular element 2 whilst it is positioned and locked on the expandable spindle 4.

The device 1 is further provided with an edging and trimming device 10 that comprises a first roller 11 intended for making an edge 16 at an end of the tubular element 2, a second roller 12 intended for trimming the edge 16 made by the first roller 11 and a third abutting roller 15 that cooperates with the first roller 11 to make said edge 16. The first roller 11 acts on the external surface of the tubular element 2, whilst the second roller 15 acts on the internal surface of the tubular element 2, in a zone corresponding to that in which the first roller 11 acts. The edging and trimming device 10 is mounted on a first slide element 13 driven to slide in a substantially horizontal direction by a linear actuator 14, for example an operating cylinder, to move towards or move away the entire device 10 from the tubular element 2.

With the first slide element 13 a second slide element 17 is associated, with which the first roller 11 and the second roller 12 are coupled. The second slide element 17 is driven to slide in a direction that is substantially horizontal with respect to the first slide element 13 by a respective second linear actuator 18. The second slide element 17 is used to bring the first roller 11 into contact with the external surface of the tubular element 2.

Lastly, with the first slide element 13 a third slide element 19 is associated with which the abutting roller 15 is coupled. The third slide element 19 is driven to slide in a direction that is substantially horizontal with respect to the first slide element 13 by a respective third linear actuator 20. The third slide element 19 is used to bring the abutting roller 15 in contact with the internal surface of the tubular element 2 and to press the abutting roller 15 against said internal surface so that it exerts a sufficient pressure to cause, together with the first roller 11 a deformation to the wall of the tubular element 2 to make the edge 16.

The first roller 11 is suitable for rotating freely around an axis D that is substantially vertical whilst the abutting roller 15 is suitable for rotating freely around a further axis D' that is substantially parallel to said axis D.

The axis B of the spindle is associated with a cam 21 with which a follower roller 22 is coupled that is associated with the first slide element 13. The assembly constituted by the cam 21 and by the follower roller 22 is used to maintain the contact between the first roller 11 and the abutting roller 15 and the external and internal surfaces of the tubular element 2, when making the edge 16, in the case of a tubular element with a non-circular section: in fact the contact between the cam 21 and the follower roller 22 makes sure that the first slide 13 moves horizontally, following the profile of the section of the tubular element 2, when the spindle 4 is rotated, so that the spindle the first roller 11 and the abutting roller 15 maintain contact with the external and internal surfaces of the tubular element 2. The second trimming roller 12 is mounted on an eccentric shaft 23, having an axis parallel to said axis D that can be moved in a substantially horizontal direction, by a driving lever 24, that is drivable by a fourth linear actuator 25. Moving the shaft 23 is used to move the second trimming roller 12 between a non-operating position and an operating position in which it trims the edge 16 made on the tubular element 2.

The device 1 operates in the following manner. After taking the resting plane 7 to the operating position by driving the operating cylinder 9, the operator rests a tubular element 2 on the resting plane 7 and inserts the tubular element 2 on the expandable spindle 4. The tubular element 2 has at least an end 2a that is tilted with respect to the longitudinal axis A of the tubular element 2 of a tilt angle α other than 90°, the size of the angle α depending on the angular size of the elbow to be made. The tubular element 2 is rested on the resting plane 7 with said end 2a in contact with the resting plane 7.

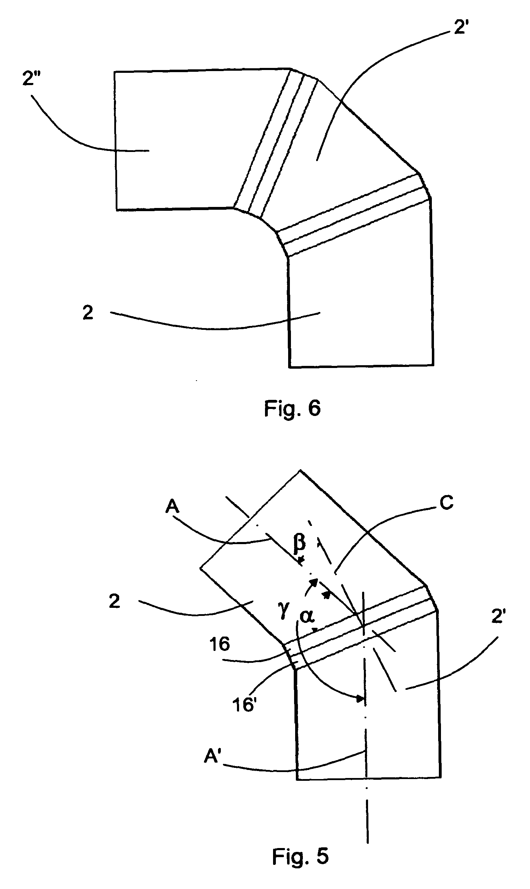

After inserting on the expandable spindle 4 the end 2a of the tubular element 2, the operator drives the expandable spindle 4 that expands locking thereon the tubular element 2. After locking on the expandable spindle 4 the tubular element 2, the operator returns the resting plane 7 to the non-operating position by driving the operating cylinder 9, the tubular element 2 now being locked on the expandable spindle 4 and supported thereby. Locking the tubular element 2 on the spindle 4 and the descent of the resting plane 7 can also be achieved with an automated procedure, the start of which is commander by the operator after depositing the end 2a of the tubular element 2 on the expandable spindle 4. At this point, the expandable spindle 4 is rotated and the first slide element 13 is advanced until the follower roller 22 comes into contact with the cam 21. Subsequently, the second slide element 17 and the third slide element 19 are driven to bring the first edging roller 11 and the abutting roller 15 in contact, respectively, with the external surface and the internal surface of the end 2a of the tubular element 2 so as to exert thereupon a sufficient pressure to obtain a plastic deformation thereof to make the edge 16. The first edging roller 11 and the abutting roller 15 deform the end 2a of the slug 2 of the tubular element so as to make an edge 16 the side walls of which are substantially parallel to the rotation axis B of the expandable spindle 4. The edge 16 is thus a portion of tubular element the C axis of which forms with the axis of the tubular element 2 an angle β=90°-α(Figure 5).

After the edge 16 is completed, the driving lever 24 is operated to move the eccentric shaft 23 so as to bring the second trimming roller 12 in an operating position to trim the edge 16.

The aim of making the edge 16 is to be able to connect two tubular elements 2, 2' (Figure 5) so that the edges 16 do not overlap and the side surfaces of the two tubular elements in the connecting zone are aligned on one another. This enables the connection to be made with a continuous weld so that the connection does not have zones in which condensate may accumulate or other material that could trigger corrosion phenomena.

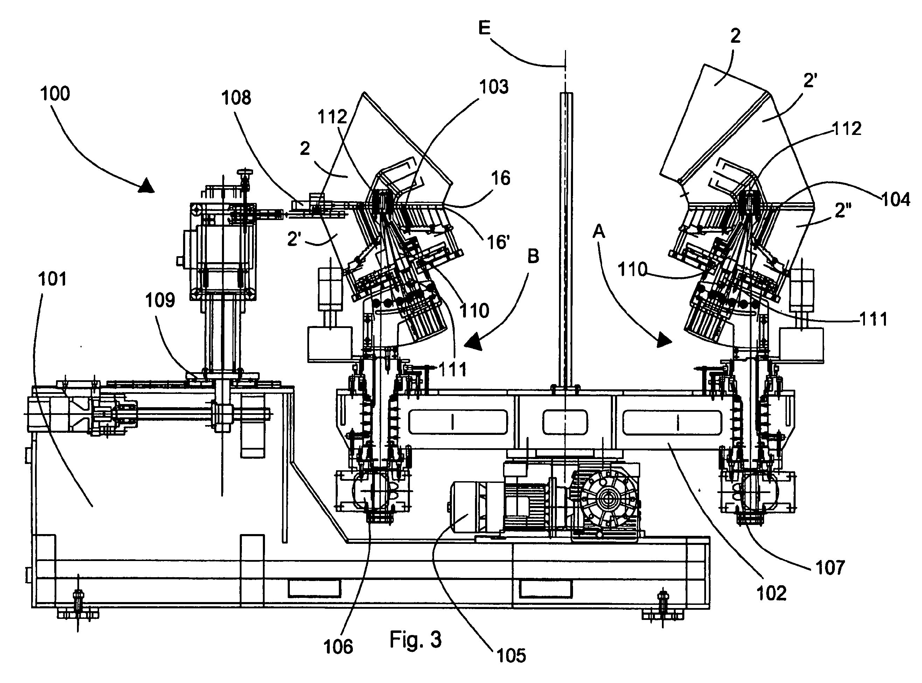

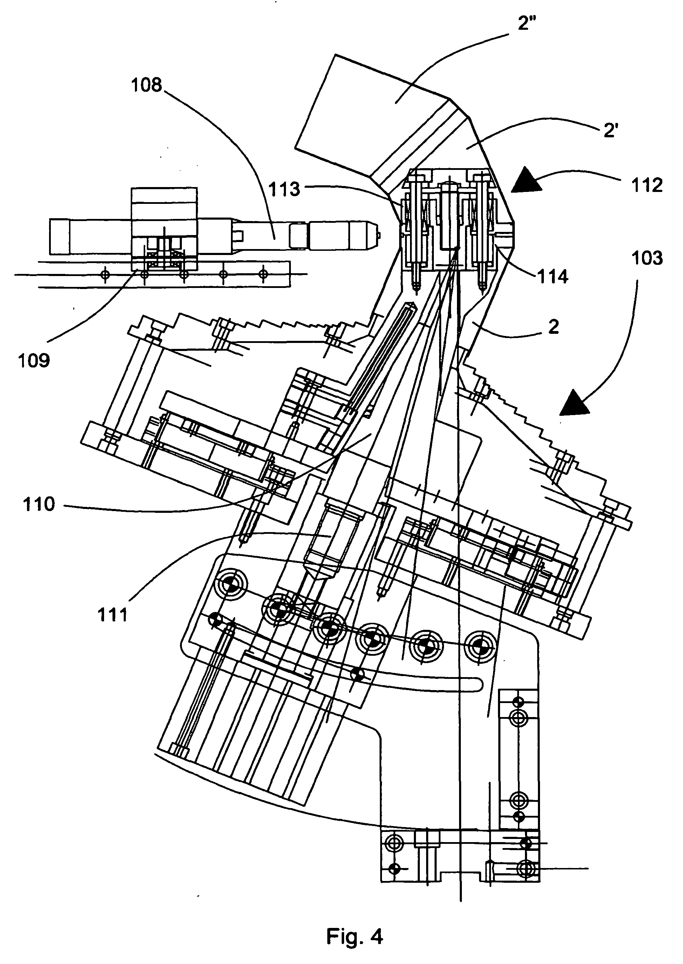

In Figures 3 and 4 there is illustrated a further welding device 100 for welding together two or more slugs of tubular elements 2, at the respective ends 2a on which edging was conducted with the previously disclosed device 1. In Figure 3 the connection of three tubular elements 2, 2', 2" is illustrated for making a 90° elbow connection, like the one illustrated in Figure 6, but it is understood that the further device 100 enables an elbow connection to be made between any number of tubular elements 2, for example elbow connections between two tubular elements 2, 2', like the one illustrated in Figure 5, or elbow connections between more than three tubular elements.

The further device 100 comprises a base 101 that supports a rotating table 102, that is rotatable around an axis E, that is substantially vertical, on which a first expandable spindle 103 and a second expandable spindle 104 are arranged in positions staggered in relation to one another by 180°: a first position A, for mounting and locking on the expandable spindle 104 tubular elements, 2, 2', 2" to be welded together and a second position B in which said tubular elements are welded.

The rotating table 102 is rotated around an axis E, that is substantially vertical, by means of a motor 105.

The first expandable spindle 103 and the second expandable spindle 104 are rotated by respective motors 106 and 107. The first spindle 103 and the second spindle 104 are provided with an expanding movement in two steps and with a compacting movement.

The expansion movement, in a first step, is used to position correctly in relation to one another two tubular elements 2, 2' to be connected together, in a second step it locks and aligns the two tubular elements 2, 2' so that they can both be rotated by the respective spindle. The compacting movement presses the two tubular elements 2, 2' against one another at the respective ends on which respective edges 16 were made with the previously disclosed device 1.

The first expanding step and the second expanding step of the spindles 103 and 104 are controlled by a respective wedge element 110 driven by a respective linear actuator 111.

The spindles 103 and 104 are further provided with a respective compacting element 112 comprising a first part 113 and a second part 114 that are movable in relation to one another. By moving together said first part 113 and said second part 114, after the tubular elements 2, 2' to be welded together have been locked on the spindle 103, or 104, with the respective edges 16, 16' in contact with one another, said edges 16, 16' are pushed against one another, compacting together the tubular elements to be welded.

The further device 100 further comprises a welding torch 108, for example a plasma welding torch, mounted on a slide 109, supported at the base 101, to bring the welding torch 108 to the tubular elements to be welded and to move the welding torch away from the tubular elements.

The operation of the further device 100 is as follows. The operator, for example with the first expandable spindle 103, in position A, inserts a first tubular element 2 on the first expandable spindle 103, positioning the expandable spindle at a preset angular position with the help of positioning means comprising, for example, the linear lasers; subsequently the operator positions a second tubular element 2' on said first expandable spindle 103, then driving the wedge element 110 to perform the first expanding step of the spindle 103, which holds the two tubular elements 2, 2', but allowing the two tubular elements 2, 2' to rotate in relation to one another, to position the two tubular elements 2, 2' in phase in relation to one another, using said positioning means.

After phasing the two tubular elements 2, 2', the operator will drive the wedge element 110 and the compacting element 112 further to perform the second total expanding step of the spindle 103 and compacting of the two tubular elements 2, 2'. Lastly, the operator will command a 180° rotation of the rotating table 102 to take the spindle 103, with the tubular elements 2, 2', to the position B in which the tubular elements 2, 2' will be welded together.

When the spindle 103 with the two tubular elements 2, 2' reaches the position B, the operator starts to rotate the spindle 103, activates the slide 109 to position the welding torch 108, lastly activating the welding torch 108 to weld the two tubular elements 2, 2' along the respective edges 16, 16'. When welding has been completed, the table 102 will rotate by 180° to return the spindle 103, with the welded workpiece, to the first position A to unload the welded workpiece from the spindle and to install on the spindle other tubular elements to be welded, or to install on the spindle a third tubular element 2", together with the two tubular elements 2, 2' that have already been welded together, to connect the third tubular element 2" to the two tubular elements 2, 2'. Meanwhile, another pair of tubular elements 2, 2' that are already fixed on the second spindle are positioned to be welded together, and so on.

In the practical embodiment, the materials, dimensions and constructional details may be different from those indicatedin in the present description but be technically equivalent thereto without falling outside the legal scope of the claims.

## Claims

1. Apparatus for making elbow connections between tubular elements (2), comprising a device (100) that is suitable for welding together respective ends (2a) of two tubular elements (2; 2') at respective cylindrical portions (16, 16'), each of said cylindrical portions (16,16') having an axis (C) that forms an angle (β) of preset size with respect to a longitudinal axis (A; A') of the respective tubular element (2; 2'), said end (2a) of each tubular element being tilted by an angle (α) with respect to the longitudinal axis (A; A') of the respective tubular element, said device (100) comprising at least an expandable spindle (103; 104) that is suitable for being coupled with two of said tubular elements (2; 2'), **characterized in that** said at least one expandable spindle (103; 104) comprises means for providing an expanding movement in two steps and a compacting movement of said tubular elements (2; 2'), said expanding movement in two steps comprising a first expanding step to hold on both said tubular elements (2; 2') but enabling both said tubular elements (2; 2') to rotate in relation to one another, and a second expanding step in which said tubular elements (2; 2') are locked in relation to one another, said compacting movement pressing said cylindrical portions (16, 16') of said tubular elements (2, 2') against one another.

2. Apparatus according to claim 1, **characterised in that** said expanding movement is controlled by a wedge element (110) driven by a respective linear actuator (111).

3. Apparatus according to claim 1, or 2, **characterised in that** said spindle (103; 104) is provided with a compacting element (112) comprising a first part (113) and a second part (114) that are movable in relation to one another to make said compacting movement.

4. Apparatus according to any one of claims 1 to 3, **characteried in that** said device (100) comprises a plurality of said expandable spindles (103; 104).

5. Apparatus according to claim 4, **characterised in that** said plurality of the expandable spindles (103; 104) is mounted on a rotating table (102).

6. Apparatus according to any one of claims 1 to 5, **characterised in that** said device (100) further comprises a welding torch (108) mounted on a slide element (109).

7. Apparatus according to one of preceding claims, **characterized by** comprising a further device (1) for making, at at least an end (2a) of a tubular element (2), said cylindrical portion (16, 16').

8. Apparatus according to claim 7, **characterised in that** said further device (1) comprises an expandable spindle (4) that is suitable for supporting and rotating said tubular element (2).

9. Apparatus according to claim 8, **characterised by** further comprising a movable plane (7) suitable for supporting said tubular element (2).

10. Apparatus according to claim 9, **characterised in that** on said movable plane (7) respective first ends of four connecting rods (8) are articulated, having respective second ends articulated on a base (3) of the device (1).

11. Apparatus according to claim 10, **characterised in that** a linear actuator (9) is coupled with one of said connecting rods.

## Patentansprüche

1. Anordnung zur Herstellung von Winkelverbindungen zwischen rohrförmigen Elementen (2), mit einer Vorrichtung (100), die dazu geeignet ist, jeweilige Enden (2a) von zwei rohrförmigen Elementen (2; 2') an entsprechenden zylindrischen Abschnitten (16, 16') zusammenzuschweißen, wobei jeder der zylindrischen Abschnitte (16, 16') eine Achse (C) aufweist, die mit einer Längsachse (A; A') des entsprechenden rohrförmigen Elementes (2; 2') einen Winkel (β) von gegebener Größe bildet, wobei das Ende (2a) eines jeden rohrförmigen Elementes um einen Winkel (α) gegenüber der Längsachse (A; A') des entsprechenden rohrförmigen Elementes geneigt ist, wobei die Vorrichtung (100) wenigstens eine expandierbare Spindel (103; 104) umfasst, die dazu geeignet ist, mit zwei der rohrförmigen Elemente (2; 2') gekoppelt zu werden, **dadurch gekennzeichnet, dass** die wenigstens eine expandierbare Spindel (103; 104) Mittel umfasst, um eine in zwei Schritten erfolgende expandierende Bewegung und eine zusammenfügende Bewegung der rohrförmigen Elemente (2; 2') bereitzustellen, wobei die in zwei Schritten erfolgende expandierende Bewegung einen ersten expandierenden Schritt umfasst, um beide rohrförmigen Elemente (2; 2') zu halten, es aber beiden rohrförmigen Elementen (2; 2') zu ermöglichen, sich relativ zueinander zu drehen, und einen zweiten expandierenden Schritt umfasst, in dem die rohrförmigen Elemente (2; 2') relativ zueinander verriegelt werden, wobei die zusammenfügende Bewegung die zylindrischen Abschnitte (16, 16') der rohrförmigen Elemente (2, 2') gegeneinander drückt.

2. Anordnung nach Anspruch 1, **dadurch gekennzeichnet, dass** die expandierende Bewegung durch ein Keilelement (110) gesteuert wird, das durch einen entsprechenden Linearaktuator (111) angetrieben wird.

3. Anordnung nach Anspruch 1 oder 2, **dadurch gekennzeichnet, dass** die Spindel (103; 104) mit einem zusammenfügenden Element (112) versehen ist, das ein erstes Teil (113) und ein zweites Teil (114) umfasst, die relativ zueinander bewegbar sind, um die zusammenfügende Bewegung auszuführen.

4. Anordnung nach einem der Ansprüche 1 bis 3, **dadurch gekennzeichnet, dass** die Vorrichtung (100) eine Vielzahl der expandierbaren Spindeln (103; 104) umfasst.

5. Anordnung nach Anspruch 4, **dadurch gekennzeichnet, dass** die Vielzahl der expandierbaren Spindeln (103; 104) auf einem Drehtisch (102) montiert ist.

6. Anordnung nach einem der Ansprüche 1 bis 5, **dadurch gekennzeichnet, dass** die Vorrichtung (100) weiter einen Schweißbrenner (108) umfasst, der auf einem Gleitelement (109) montiert ist.

7. Anordnung nach einem der vorhergehenden Ansprüche, **gekennzeichnet durch** eine weitere Vorrichtung (1), um an wenigstens einem Ende (2a) eines rohrförmigen Elementes (2) den zylindrischen Abschnitt (16, 16') auszubilden.

8. Anordnung nach Anspruch 7, **dadurch gekennzeichnet, dass** die weitere Vorrichtung (1) eine expandierbare Spindel (4) umfasst, die dazu geeignet ist, das rohrförmige Element (2) zu tragen und zu drehen.

9. Anordnung nach Anspruch 8, **dadurch gekennzeichnet, dass** sie ferner eine bewegliche Ebene (7) umfasst, die dazu geeignet ist, das rohrförmige Element (2) zu tragen.

10. Anordnung nach Anspruch 9, **dadurch gekennzeichnet, dass** an der beweglichen Ebene (7) jeweilige erste Enden von vier Verbindungsstäben (8) angelenkt sind, deren entsprechende zweite Enden an einer Basis (3) der Vorrichtung (1) angelenkt sind.

11. Anordnung nach Anspruch 10, **dadurch gekennzeichnet, dass** ein Linearaktuator (9) mit einem der Verbindungsstäbe gekoppelt ist.

## Revendications

1. Appareil pour réaliser des raccords coudés entre des éléments tubulaires, comprenant un dispositif (100) qui est apte à souder ensemble des extrémités respectives (2a) de deux éléments tubulaires (2 ; 2') au niveau de portions cylindriques respectives (16, 16'), chacune desdites portions cylindriques (16, 16') possédant un axe (C) qui forme un angle (β) de taille prédéterminée avec un axe longitudinal (A ; A') de l'élément tubulaire respectif (2 ; 2'), ladite extrémité (2a) de chaque élément tubulaire étant inclinée d'un angle (α) par rapport à l'axe longitudinal (A ; A') de l'élément tubulaire respectif, ledit dispositif (100) comprenant au moins un mandrin extensible (103 ; 104) qui est apte à être couplé avec deux desdits éléments tubulaires (2 ; 2'), ***caractérisé en ce que*** ledit au moins un mandrin extensible (103 ; 104) comprend des moyens pour assurer un mouvement d'expansion en deux étapes et un mouvement de compactage desdits éléments tubulaires (2 ; 2'), ledit mouvement d'expansion en deux étapes comprenant une première étape d'expansion pour maintenir les deux dits éléments tubulaires (2 ; 2') mais en permettant aux deux dits éléments tubulaires (2 ; 2') de tourner par rapport l'un à l'autre, et une deuxième étape d'expansion dans laquelle lesdits éléments tubulaires (2 ; 2') sont bloqués l'un par rapport à l'autre, ledit mouvement de compactage pressant lesdits portions cylindriques (16, 16') desdits éléments tubulaires (2, 2') l'une contre l'autre.

2. Appareil selon la revendication 1, ***caractérisé en ce que*** ledit élément d'expansion est contrôlé par un élément à coin (110) entraîné par un vérin linéaire respectif (111).

3. Appareil selon la revendication 2, ***caractérisé en ce que*** ledit mandrin (103 ; 104) est pourvu d'un élément compacteur (112) comprenant une première partie (113) et une deuxième partie (114) qui sont mobiles l'une par rapport à l'autre pour réaliser ledit mouvement de compactage.

4. Appareil selon l'une quelconque des revendications 1 à 3, ***caractérisé en ce que*** ledit autre dispositif (100) comprend une pluralité de dits mandrins extensibles (103 ; 104).

5. Appareil selon la revendication 4, ***caractérisé en ce que*** ladite pluralité de mandrins extensibles (103 ; 104) sont montés sur une table rotative (102).

6. Appareil selon l'une quelconque des revendications 1 à 5, ***caractérisé en ce que*** ledit dispositif (100) comprend en outre une torche de soudage (108) montée sur un élément à coulisse (109).

7. Appareil selon l'une quelconque des revendications précédentes, ***caractérisé en ce qu*'**il comprend un autre dispositif (1) pour réaliser, au niveau d'au moins une extrémité (2a) d'un élément tubulaire (2), ladite portion cylindrique (16, 16').

8. Appareil selon la revendication 7, ***caractérisé en ce que*** ledit autre dispositif (1) comprend un mandrin extensible (4) qui est apte à supporter et à faire tourner ledit élément tubulaire.

9. Appareil selon la revendication 8, ***caractérisé en ce qu*'**il comprend en outre un plan mobile (7) apte à supporter ledit élément tubulaire (2).

10. Appareil selon la revendication 9, ***caractérisé en ce que*** sur ledit plan mobile (7) sont articulées des premières extrémités respectives de quatre bielles (8) ayant des deuxièmes extrémités respectives articulées sur une base (3) du dispositif (1).

11. Appareil selon la revendication 10, ***caractérisé en ce qu*'**un vérin linéaire (9) est couplé à l'une desdites bielles.
